# EUROPEAN PATENT APPLICATION

(11) **EP 2 104 335 A1**
(43) Date of publication of application: **23.09.2009**
(21) Application number: 09154932.9
(22) Date of filing: 11.03.2009
(51) Int. Cl.: H04N 5/225, H04N 5/232

(54) **An apparatus and a method for digital photographing**

(30) Priority: 12.03.2008 SE 0800571
(71) Applicant: Mindy AB, 113 56 Stockholm (SE)
(72) Inventor: Beskow, Martin, 113 56 Stockholm (SE)
(74) Representative: Löfgren, Bengt Håkan Alpo

(57) **Abstract**

A method and an apparatus for digital photography, where a light-sensitive first image sensor (114, 214) is adapted to capture light and transform it to electrical signals, control means activate during a first period of time the first image sensor (114, 214) to capture light and subsequently inactivate the same, and the electrical signals of the first image sensor (114, 214) are converted to a first image. A light-sensitive second image sensor (116, 216) is adapted to capture light and transform it to electrical signals, and the electrical signals of the second image sensor (116, 216) are converted to a second image. Light guiding means receive an amount of light and guide a first portion of the amount of light to the first image sensor (114, 214) and guide a second portion of the amount of light to the second image sensor (116, 216). The control means activate during a second period of time, immediately subsequent to the first period, the second image sensor (116, 216) to capture light and subsequently inactivate the same, whereby two digital images of the same subject and from the same moment of exposure are obtained.

## Description

### Technical Field

The present invention relates to an apparatus for digital photography, comprising a light-sensitive first image sensor adapted to capture light and transform it to electrical signals, control means adapted to during a first period of time activate the first image sensor to capture light and subsequently inactivate the same, and converting means for converting the electrical signals of the first image sensor to a first image. Further, the present invention relates to a method for digital photography, and a computer programme product adapted for performing the method.

### Background of the Invention

When photographing objects which are moving to a lesser or greater extent, especially people, with a camera flash, there are problems associated with the digital photo technology of today. During the subsequent finishing/processing in a computer, it is difficult, and sometimes impossible, to separate different components in the image, especially foreground and background.

The background and the foreground often have different illumination in the form of different flash illumination. The background and the foreground can e.g. be separately illuminated. This separation of illumination is lost with the technology of today.

When photographing, there are also other conditions which makes the digital images taken by today's technology not including enough data or image information in order to attain digital images which have a sufficiently good quality, not even after a subsequent image processing. That is due to the fact that image information from the moment of exposure is lost and can not be used in the subsequent image processing.

US 2003/0137597 A1 discloses an apparatus which captures a first image of a subject by using an electric flash at a first flash intensity, and a second image of the subject using the electric flash at a second flash intensity.

US 3 653 314 describes a camera system having two lenses. Pictures are taken via the first lens, and focus is set via the second lens. The central axis of the second lens is perpendicular to the central axis of the first lens. A reflecting surface is provided in front of the lenses to guide the light, the surface being pivotable between a first position and a second position. In the first position the light is reflected and guided through the second lens for setting the focus, and in the second position the light passes by the surfaces and reaches the second lens behind which the photographic film is provided.

WO 01/37041 A1 discloses a large format camera comprising a first camera having a longitudinal centre axis and a first lens, and a second camera having a longitudinal centre axis and a second lens, where the second camera is arranged with its longitudinal centre axis perpendicular the longitudinal centre axis of the first camera, and a mirror which is movably mounted in front of the lenses. The film is provided in the first camera, whereas the other camera is utilized for obtaining sharpness information.

CA 2 228 403 A1 describes a method where several pictures are combined, the pictures being taken with different illuminations by directing the light source in different ways, to create a combined image which appears to be taken with a combination of the illuminations of the different pictures.

Further apparatuses and methods for photography are disclosed in GB2410642, US2007/0025717, EP1462763, WO2007/073781, US2006/0029382, US200710201853, and US4681415.

However, the above-mentioned solutions do not solve the above-mentioned problem.

### The Object of the Invention

The object of the present invention is thus to provide uncomplicated and efficient photography which provides images of high image quality, especially with regard to illumination.

### Summary of the Invention

The above-mentioned object of the present invention is attained by providing an apparatus of the kind mentioned in the introductory part of the description, having the features which are mentioned in the characterizing portion of claim 1, and by providing a method the kind mentioned in the introductory part of the description, having the features which are mentioned in the characterizing portion of claim 10.

The inventor has found that when photographing moving objects, especially people, with a camera flash, one drawback is that different sources of light end up on only one image upon exposure. The inventor has also found that the information or data with regard to parts of the three dimensional character of the subject are lost when the two dimensional image is exposed with only one exposure. Further, the inventor has found that it is better to distribute image information on two images, of the same subject, which together form the complete image, e.g. that the background and the foreground are separately exposed. At the digital finishing of the image material, the two images can be separately adjusted and then be joined into one complete image at a final stage. This is attained by the apparatus and the method according to the present invention. By the present invention, the three dimensional information is maintained after the transition from three to two dimensions, and especially a separation of the foreground and the background is enabled. The converting means can comprise one or several separate units.

During the first period, the setting of the sharpness (point of sharpness), the setting of the aperture, and/or the setting of the time of exposure for the first image sensor can also be different from the setting of the sharpness, the setting of the aperture, and/or the setting of the time of exposure for the second sensor during the second period. Hereby, the first and second images obtain different sharpness and/or exposure.

According to an advantageous embodiment of the apparatus according to the present invention, the apparatus comprises illuminating means adapted to momentarily illuminate a first region of a subject to be photographed, and the control means are adapted to control the illuminating means to illuminate the first region during the first period. In this embodiment, the first region is advantageously the foreground of the subject, while the background of the subject is remote in relation to the foreground. Hereby, uncomplicated and efficient photography which provides images of high image quality is attained. According to an advantageous embodiment, said illuminating means comprise a first flash for momentarily illuminating the first region.

According to a further advantageous embodiment of the apparatus according to the present invention, said illuminating means are adapted to momentarily illuminate a second region of the subject to be photographed, and the control means are adapted to control the illuminating means to illuminate the second region during the second period. Hereby, uncomplicated and efficient photography which provides images of high image quality is attained. According to an advantageous embodiment, said illuminating means comprise a first flash for momentarily illuminating the first region and a second flash for momentarily illuminating the second region.

According to another advantageous embodiment of the apparatus according to the present invention, said light guiding means comprise at least one polarizing filter adapted to change its polarization between the first and the second period. Hereby, two images of the same subject with the polarization direction as the difference between the images are obtained, and by means of the polarizing filter the subject can thus be illuminated in a uniform way during the first and the second period while two different images of the same subject are obtained, whereby uncomplicated and efficient photography which provides images of high image quality is attained

By illuminating the subject in a certain way during the first period and in another way during the second period, the final image can comprise information or data which otherwise is/are lost, whereby a digital image having an even and high quality can be obtained. A common request amongst photographers is to be able to separate the foreground from the background. By the present invention, the foreground and the background can be separately illuminated to form different images of the same subject. The separation is in other words already executed at the moment of exposure, i.e. at the moment when the different exposures of the image sensors occurs. Exchanging the background at the subsequent digital image processing is easy to perform.

In the final image, obtained by the present invention, light from the background "overlaps" the light from the foreground, and there is a continuous transition between the two different images. An example of this is appears when the subject is in the form of an individual where the skin of the individual at flat angles reflects the background light. The skin's reflection of the background gives a more true impression of the image, i.e. appears not to be manipulated in a computer. The present invention captures this by the fact that the two images, when they have been combined or joined, i.e. been superposed, partly enter each other. This is not case in traditional separation techniques when a sharp border is outlined between foreground and background. If the background is made lighter during the finishing in the computer, the region of the foreground becomes automatically lighter as well, since the foreground at the exposure of the background has been affected by the background light. This provides a natural illuminated completed image, even after the manipulation of illumination levels, or when exchanging the background during the finishing.

According to a further advantageous embodiment of the apparatus according to the present invention, the control means comprise a first shutter adapted to during the first period open for exposure of light of the first image sensor and subsequently close, and a second shutter adapted to during the second period open for exposure of light of the second image sensor and subsequently dose. Instead of shutters, the control means can comprise other means adapted to activate and inactivate, respectively, the image sensors for exposure, e.g. an electrical shutter function integrated with the light sensitive surface of the image sensor. Hereby, uncomplicated and efficient photography producing images of high quality is attained.

According to another advantageous embodiment of the apparatus according to the present invention, said light guiding means comprise a surface adapted to receive said amount of light and to let through one of the portions of the amount of light and guide it towards one of the image sensors and to reflect the other portion of the amount of light and guide it towards the second image sensor. By this embodiment, uncomplicated and efficient photography producing high quality images is attained. The surface can be in the form of a semi-transparent mirror which for example reflects about 50 % of the amount of light it receives and lets through the other about 50 %, Hereby, two different images are obtained without any moving parts, which would have to change positions between the first and second periods, included in the light guiding means, since the position of the semi-transparent mirror is unchanged between and during the two periods. The period of the different exposures of the two image sensors is set taking into account the flash period of each flash and any possible inertia in the shutter function of each image sensor.

According to yet another advantageous embodiment of the apparatus according to the present invention, the apparatus comprises a case provided with a light opening, said light guiding means comprising at least one lens, and the first and the second image sensor are located in the case. By this embodiment, uncomplicated and efficient photography producing images of high quality is attained. Advantageously, said surface is provided in the case. Hereby, the efficiency of the photography is further improved, and the photography produces images of high quality. By these two embodiments, a compact and user-friendly camera based on the present inventive idea is achieved.

According to a further advantageous embodiment of the apparatus according to the present invention, the apparatus comprises a first case and a second case, each case being provided with a light opening, where said light guiding means comprise at least two lenses, the first image sensor is located in the first case, and the second image sensor is located in the second case. By this embodiment, efficient photography producing images of high quality is attained.

According to an advantageous embodiment of the apparatus according to the present invention, the apparatus comprises processing means adapted to form a joined, or combined, image of the first and the second image. The images are placed on two different image layers which together form the completed image. Each image layer can be separately manipulated with small or insignificant influence on the other image. This is especially true for the influence of the background on the foreground. Hereby, efficient photography producing images of high quality is attained.

According to an advantageous embodiment of the method according to the present invention, the method comprises the step: momentarily illuminating a first region of a subject which is photographed during the first period. Advantageously, said illumination of the first region is effected by means of a first flash for momentary illuminating the first region.

According to another advantageous embodiment of the method according to the present invention, the method comprises the step: momentarily illuminating a second region of the subject during the second period. Advantageously, said illumination of the second region is effected by means of a second flash for momentarily illuminating the second region.

According to another advantageous embodiment of the method according to the present invention, the guidance of the light comprises the step of polarization, e.g. by means of a polarizing filter which is forced to change its polarization between the first and the second periods.

According to another advantageous embodiment of the method according to the present invention, the first image and the second image are joined to a combined image.

According to a further advantageous embodiment of the method according to the present invention, the activation and inactivation of each image sensor are effected by means of a first shutter which during the first period is opened for exposure of light of the first image sensor and is subsequently closed, and a second shutter which during the second period is opened for exposure of light of the second image sensor and is subsequently closed.

According to an advantageous embodiment of the method according to the present invention, the reception and the guidance, respectively, of said amount of light and its portions are effected by means of a surface which is forced to receive said amount of light and to let through one of the portions of the amount of light and guide it towards one of the image sensors and to reflect the other portion of the amount of light and guide it towards the second image sensor.

According to a further advantageous embodiment of the method according to the present invention, the reception and the guidance, respectively, of said amount of light and its portions are effected by means of a case in which the first and second image sensors and said surface are located, the case being provided with a light opening and lens.

According to another advantageous embodiment of the method according to the present invention, the reception and the guidance, respectively, of said amount of light and its portions are effected by means of a first case and a second case, each case being provided with a light opening and a lens, the first image sensor being located in the first case, and the second image sensor being located in the second case.

The positive effects of the above-mentioned embodiments of the method according to the present invention have been described above in connection with the embodiments of the apparatus of the invention.

Further advantageous embodiments of the method and the apparatus according to the present invention emerge from the dependent claims, and further advantages with the present invention emerge from the detailed description of embodiments.

Further, the present invention provides at least one computer program product directly loadable into the internal memory of at least one digital computer, comprising software code portions for performing the steps of any of the claims 10 to 14, and/or the steps according to any of the above-mentioned embodiments of the method, when said at least one product is/are run on said at least one computer.

### Brief Description of the Drawings

The present invention will now be described, for exemplary purposes, in more detail by way of embodiments and with reference to the enclosed drawings, in which:
- Figs. 1-3: are schematic cross-section views of a first embodiment of the present invention;
- Figs. 1B-3B: are schematic cross-section views of a second embodiment of the apparatus according to the present invention;
- Figs. 4-6: are schematic cross-section views of a third embodiment of the apparatus according to the present invention; and
- Fig. 7: is a flow chart illustrating an embodiment of the method according to the present invention.

### Detailed Description of Preferred Embodiments

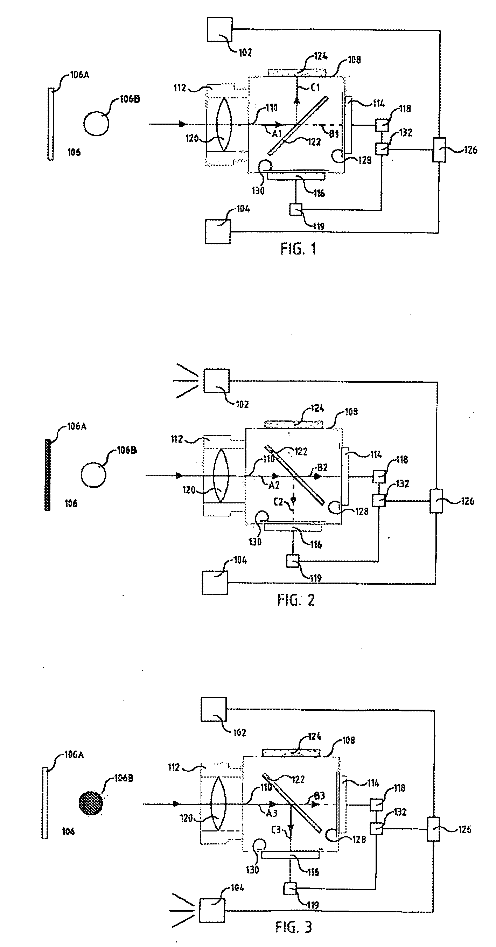

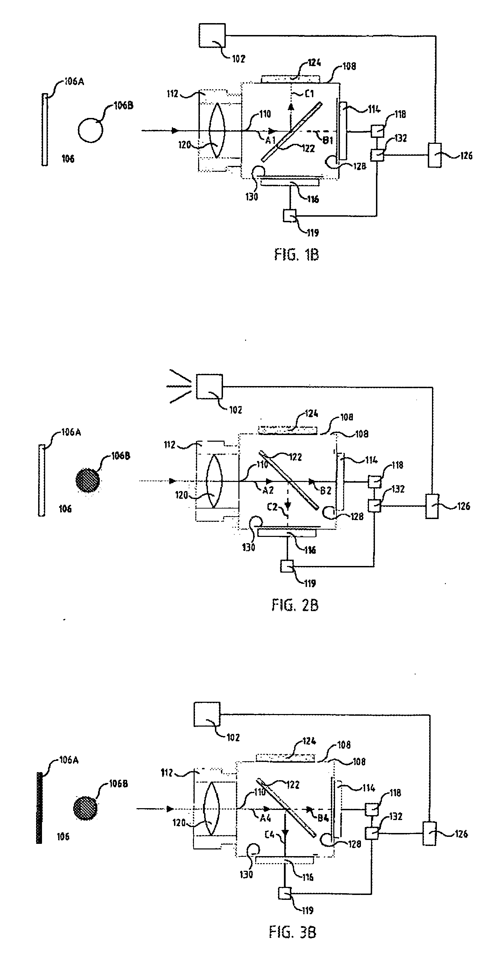

Figs. 1-3 show a first embodiment of the apparatus according to the present invention, in the form of a digital camera. With reference to Fig. 1, the apparatus comprises a first flash 102 and a second flash 104 for momentary illuminating a subject 106 (scene or object), where each flash 102, 104 advantageously has flash period of less than approximately 0.02 seconds, and more advantageously less or equal to 0.005 seconds. The first flash 102 is adapted to illuminate a first region 106A of the subject 106, while the second flash 104 is adapted to illuminate a second region 106B of the subject 106. The apparatus also includes a light-tight camera case 108 provided with a light opening 110 where an objective 112, provided with an aperture, or diaphragm, is provided. In the camera case 108, a light-sensitive first image sensor 114 and a light-sensitive second image sensor 116 are provided, which are adapted to capture light and transform it to electrical signals. The apparatus is provided with first converting means 118 for converting the electrical signals of the first image sensor 114 to a first image, and second converting means 119 for converting the electrical signals of the second image sensor 116 to a second image. The conversion of electrical signals to an image per se is performed in conventional ways. Each image sensor 114, 116 is a light-sensitive component which has the same function as the photographic film of an analogous camera, and can comprise a semiconductor device of the type CCD or CMOS, or the like.

The apparatus includes light guiding means adapted to receive a certain amount of light *A₁, A₂, A₃, A₄* from the subject 106 in question and adapted to guide a first portion *B₁, B₂, B₃, B₄* of the amount of light to the first image sensor 114 and to guide a second portion *C₂, C₃, C₄* of the amount light to the second image sensor 116. In Figs. 1-3, there are different amounts of light *A₁, A₂, A₃* which are received by the light guiding means as a result of different illuminations of the subject 106 in the different figures, and consequently, these are divided into different portions *B₁, B₂, B₃* and *C₂, C₃, C₄*. The similar situation applies to the embodiments of Figs. 1B-3B and Figs. 4-6.

Said light guiding means includes a lens 120 provided in the objective 112 and a semi-transparent, or semi-reflective, mirror 122 provided in the camera case 108 between the lens 120 and the image sensors 114, 116. The mirror 122 is adapted to receive the certain amount of light *A₁, A₂, A₃, A₄* and to let through the first portion *B₁, B₂, B₃, B₄* of the amount of light and guide it towards the first image sensor 114 and reflect the second portion *C₂, C₃, C₄* of the amount of light and guide it towards the second image sensor 116. The mirror 122 is mounted pivotally about an axis, which axis extends horizontally in the figure and is positioned at the same distance to the first and second image sensor 114, 116. In Fig. 1, the mirror 122 is shown in the first position when the sharpness is set in a conventional way by means of focusing means 124 which give information of the sharpness and are hit by the portion of the amount of light which is reflected by the mirror 122.

After the setting of the sharpness, the mirror 122 is guided, by a 90 degrees counter-clockwise rotation, to a second position shown in Figs. 2 and 3.

The apparatus includes control means including a control device 126 adapted to control the rotation of the mirror 122 between the two positions. The control means also include a first shutter 128 adapted to open for exposure of light of the first image sensor 114 and subsequently dose, and a second shutter 130 adapted to open for exposure of light of the second image sensor 116 and subsequently dose.

The control device 126 is adapted to, during a first period of time, control the first shutter 128 to open for exposure of light of the first image sensor 114 and subsequently close. The control device 126 is also adapted to, during the first period, control the first flash 102 to momentary illuminate the first region 106A of the subject 106. This first period is illustrated in Fig. 2.

The control device 126 is adapted to, during a second period of time, control the second shutter 130 to open for exposure of lig ht of the second image sensor 116 and subsequently close. The control device 128 is adapted to, during the second period, control the second flash 104 to momentarily illuminate the second region 106B of the subject 106. This second period is illustrated in Fig. 3, where the first shutter 128 is closed. The length, or duration, of the first and the second period, respectively, is approximately 0.005 seconds, but can naturally be increased or reduced. The second period starts immediately subsequent to the first period.

By means of the converting means 118, 119 the electrical signals of the image sensors 114, 116 are converted to images of the same subjected, which are in principle identical., from the same moment of exposure, but where the images have different illumination. One of the images has for example the foreground illuminated, while the other image has the background illuminated. By the semi-transparent mirror 122, the first and second images are taken from the same angle.

The apparatus comprises processing means 132 adapted to form a completed joined, or combined, image from the first and the second image, i.e. the first and second images are combined to obtain one image where, e.g., the foreground and background together form the complete image. Because one of the images, because of the semi-transparent mirror 122, is mirror-inverted in relation to the second image, one of the images must be mirror-inverted. Thereafter, the two images are placed on two different image layers. The two image layers together form the combined image.

Figs. 1B-3B show schematic views of a second embodiment of the apparatus according to the present invention. The second embodiment differs from the embodiment of Figs. 1-3 only by the exclusion of the second flash 104 for momentarily illuminating the subject 106. In Fig. 2B, the first flash 102 illuminates the first region 106B of the subject 106, while there is no active momentary illumination of the second region 106B of the subject 106. However, two images having different illumination are obtained anyway.

In the embodiments of Figs. 1-3 and 1B-3B, the reflecting surface of the mirror 122 and the central axis of the lens 120 form an angle of 45 degrees.

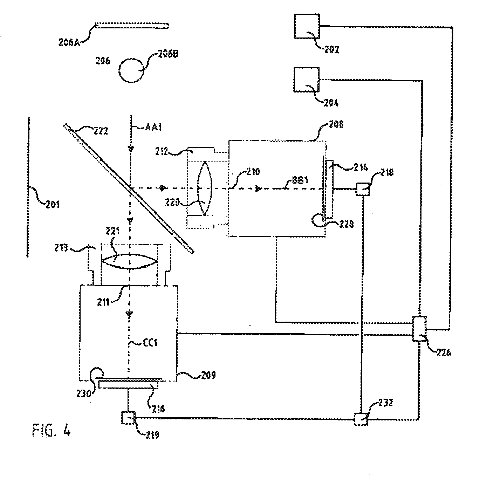

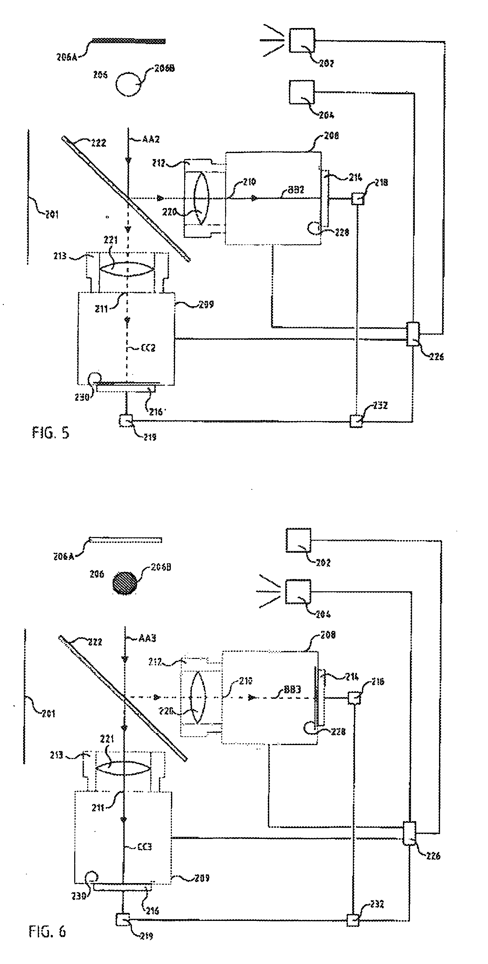

Figs. 4-6 show a third embodiment of the apparatus according to the present invention, in the form of two digital cameras. The Apparatus includes two light-tight cases 208, 209 each provided with a light opening 210, 211 and an objective 212, 213 provided with an aperture, or diaphragm. To prevent that other light than the wanted light is exposed, a dark shielding screen 201 is placed at a strategic position next to the semi-transparent mirror 222. The apparatus is position in relation to the subject as shown in Fig. 4. The setting of the sharpness is performed by making the automatic focus of the cameras, by connected them via control device 226, work on the same point, which results in equal setting of the sharpness. The first period is illustrated in Fig. 5, and the second period is illustrated in Fig. 6. In this embodiment, the first image sensor 214 is provided in the first camera case 208, and the second image sensor 216 is provided in the second case 209. The light guiding means of this embodiment include two lenses 220, 221 each provided in an objective 212, 213. The semi-transparent mirror 222 receives a certain amount of light *AA₁, AA₂, AA₃* from the subject 206 and guides, by reflection, a first portion *BB₁, BB₂, BB₃* of the amount of light to the first image sensor 214 and guides, by letting through, a second portion *CC₁, CC₂, CC₃* of the amount of light to the second image sensor 216. The semi-transparent mirror 222 is provided in front of the two lenses 220, 221, between the lenses 220, 221 and the subject 206, and provided outside each camera case 208, 209. The first and second image sensors 214, 216 are positioned at the same distance to the reflection of the light in the mirror 222. The semi-transparent mirror 222 of this embodiment does not need to be pivotally arranged. Otherwise, this embodiment has features, i.e. the first and second flash 202, 204, the first and second image sensor 214, 216, the first and second converting means 218, 219, the semi-transparent mirror 222, a control device 226, a first and a second shutter 228, 230, and processing means 232, which correspond to the corresponding features 102, 104, 114, 116, 118, 119, 122, 126, 128, 130, 132 of the first embodiment of Figs. 1-3.

In the embodiments of Figs. 4-6, the reflecting surface of the mirror 222 and the central axis of the lens 220 of one of the camera cases 208 form an angle of 45 degrees, and the central axes of both lenses 220, 221 form an angle of 90 degrees.

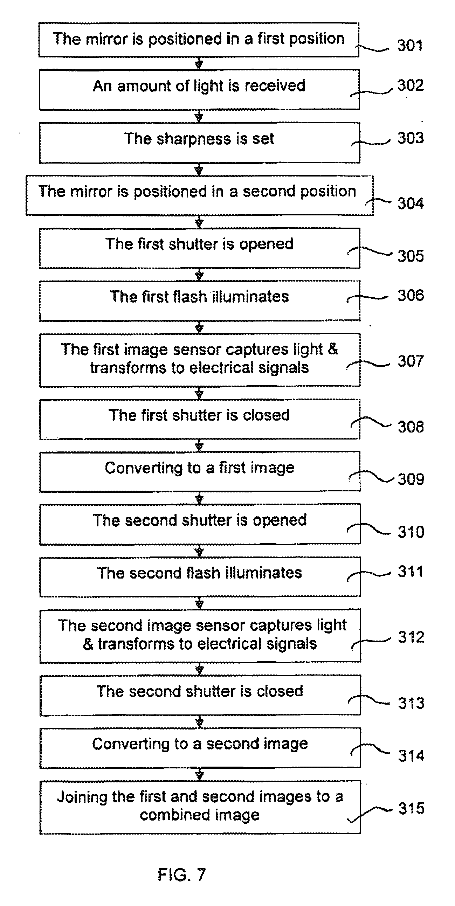

Fig. 7 shows a flow chart illustrating an embodiment of the method according to the present invention, when using the above-mentioned first embodiment of the apparatus according to the present invention, and includes the following steps: The semi-transparent mirror 122 is positioned in its first position, at 301, and a certain amount of light from the subject 106 is received by the lens 120 and the corresponding certain amount of light is received by the semi-transparent mirror, at 302. That portion of the amount of light which is reflected by the mirror 122 is guided to the focusing means 124 and the sharpness is set, at 303. Thereafter, the mirror 122 is rotated to its second position, at 304.

During a first period of time, the first shutter 128 is forced to open for exposure of light of the first image sensor, at 305, the first flash 102 is forced to illuminate the first region 106A of the subject, at 306, and a first portion of the amount of light from the subject is let through by the mirror 122 and guided the light-sensitive first image sensor 114. The first image sensor 114 captures the light and transforms it to electrical signals, at 307, subsequently the first shutter 128 is closed, at 308, and the electrical signals of the first image sensor 114 are converted to a first image, at 309.

During a second period of time, immediately subsequent to the first period, the second shutter 130 is forced to open for exposure of light of the second image sensor, at 310, the second flash 104 is forced to illuminate the second region 106B of the subject, at 311, and a second portion of the amount of light from the subject is reflected by the mirror 122 and guided the light-sensitive second image sensor 116. The second image sensor 116 captures the light and transforms it to electrical signals, at 312, subsequently the second shutter 130 is closed, at 313, and the electrical signals of the second image sensor 116 are converted to a second image, at 314. Hereby, two digital images of the same subject and from the same moment of exposure have been obtained.

When using the third embodiment of the apparatus, another embodiment of the method of the invention includes the step of setting the sharpness, whereupon the steps 305 to 315 follows as disclosed in connection with Fig. 7.

The two digital images are joined, or combined, during a processing step, at 315, where one of the images is first mirror- inverted, and then the images are superposed in two different image layers which together form the complete image. The finishing procedure in step 315 can be performed by using a computer provided in the camera, or by using a computer which is separate from the camera. A computer program product according to the present invention which is adapted to perform the steps 301 to 315 is loadable into the internal memory of such a computer.

It is to be understood that the present invention can comprise that the first portion of the amount of light also can be guided towards the second image sensor, while the second portion of the amount of light is guided towards the first image sensor, and that said surface can guide any portion via reflection while the other portion is guided by letting it through, without departing from the scope of the invention as defined in the appended claims.

## Claims

1. An apparatus for digital photography, comprising a light-sensitive first image sensor (114, 214) adapted to capture light and transform it to electrical signals, control means adapted to during a first period of time activate the first image sensor (114, 214) to capture light and subsequently inactivate the same, and converting means (118, 119, 218, 219) for converting the electrical signals of the first image sensor (114, 214) to a first image, **characterized in that** the apparatus comprises a light-sensitive second image sensor (116, 216) adapted to capture light and transform it to electrical signals, the converting means (118, 119, 218, 219) being adapted to convert the electrical signals of the second image sensor (116, 216) to a second image, and light guiding means adapted to receive a certain amount of light and adapted to guide a first portion of the amount of light to the first image sensor (114, 214) and to guide a second portion of the amount of light to the second image sensor (116, 216), and **in that** the control means are adapted to during a second period of time, immediately subsequent to the first period, activate the second image sensor (116, 216) to capture light and subsequently inactivate the same, whereby two digital images of the same subject and from the same moment of exposure are obtained.

2. An apparatus according to claim 1, **characterized in that** the apparatus comprises illuminating means adapted to momentarily ruminate a first region (106A, 206A) of a subject (106, 206) to be photographed, and **in that** the control means are adapted to control the illuminating means to illuminate the first region (106A, 206A) during the first period.

3. An apparatus according to claim 2, **characterized in that** said illuminating means comprise a first flash (102, 202) for momentarily illuminating the first region (106A, 206A).

4. An apparatus according to claim 2 or 3, **characterized in that** said illuminating means are adapted to momentarily illuminate a second region (106B, 206B) of the subject (106, 206) to be photographed, and **in that** the control means are adapted to control the illuminating means to illuminate the second region (106, 206B) during the second period.

5. An apparatus according to claim 4, **characterized in that** said illuminating means comprise a second flash (104, 206) for momentarily illuminating the second region (1 06B, 206B).

6. An apparatus according to any of the claims 1 to 5, **characterized in that** said light guiding means comprise a surface (122, 222) adapted to receive said amount of light and to let through one of the portions of the amount of light and guide it towards one of the image sensors (114, 116; 214, 216) and to reflect the other portion of the amount of light and guide it towards the second image sensor (114, 116; 214, 216).

7. An apparatus according to claim 6, **characterized in that** the apparatus comprises a case (108) provided with a light opening (110), **in that** said light guiding means comprise at least one lens (120), and **in that** the first and the second image sensor (114, 116) are located in the case.

8. An apparatus according to claim 7, **characterized in that** said surface (122) is provided in the case (108)

9. An apparatus according to claim 6, **characterized in that** the apparatus comprises a first case (208) and a second case (209), each case (208, 209) being provided with a light opening (210, 211), **in that** said light guiding means comprise at least two lenses (220, 221), **in that** the first image sensor (214) is located in the first case (208), and **in that** the second image sensor (216) is located in the second case (209).

10. A method for digital photography comprising the following steps:
■ receiving a certain amount of light,
■ guiding a first portion of the amount of light to a light-sensitive first image sensor adapted to capture light and transform it to electrical signals,
■ activating the first image sensor to capture light during a first period of time and subsequently inactivating the same,
■ converting the electrical signals of the first image sensor to a first image,
■ guiding a second portion of the amount of light to a light-sensitive second image sensor adapted to capture light and transform it to electrical signals,
■ activating the second image sensor to capture light during a second period of time and subsequently inactivating the same,
■ converting the electrical signals of the second image sensor to a second image, whereby two digital images of the same subject and from the same moment of exposure are obtained.

11. A method according to claim 10, **characterized by** the following step:
■ momentarily illuminating a first region of a subject which is photographed during the first period.

12. A method according to claim 11, **characterized in that** said illumination of the first region is effected by means of a first flash for momentarily illuminating the first region.

13. A method according to claim 11 or 12, **characterized by** the following step:
■ momentarily illuminating a second region of the subject during the second period.

14. A method according to claim 13, **characterized in that** said illumination of the second region is effected by means of a second flash for momentarily illuminating the second region.

15. At least one computer program product directly loadable into the internal memory of at least one digital computer, comprising software code portions for performing the steps of any of the claims 10 to 14 when said at least one product is/are run on said at least one computer.
